# EUROPEAN PATENT SPECIFICATION

(11) **EP 1 416 573 B1**
(45) Date of publication and mention of the grant of the patent: **17.10.2007**
(21) Application number: 03090199.5
(22) Date of filing: 04.07.2003
(51) Int. Cl.: H01M 10/40, H01M 4/02, H01M 4/66, H01M 4/58, H01M 4/04

(54) **Negative electrode for lithium secondary battery and lithium secondary battery comprising same**
Negativelektrode für Lithiumsekundärbatterie und Lithiumsekundärbatterie enthaltend eine solche Elektrode
Electrode négative pour une pile secondaire au lithium et pile secondaire au lithium comportant ladite électrode

(30) Priority: 25.10.2002 KR 2002065483
(43) Date of publication of application: 06.05.2004
(73) Proprietor: Samsung SDI Co., Ltd., Suwon-city, Kyungki-do 442-373 (KR)
(72) Inventor: Lee, Jea-Woan, Hwanggol Maeul Jookong 1 danji Apt., Suwon-city, Kyungki-do (KR); Cho, Chung-Kun, LD Korong Apt., Suwon-city, Kyungki-do (KR)
(74) Representative: Hengelhaupt, Jürgen

(56) References cited:
- EP-A- 0 855 752
- EP-A- 1 231 651
- EP-A- 1 244 164
- US-A- 4 911 995
- US-A- 5 435 054
- US-A- 6 007 935
- US-A- 6 025 089
- US-A- 6 025 094
- US-A1- 2001 031 397
- US-A1- 2002 086 206
- US-A1- 2002 086 213
- US-A1- 2002 086 215
- US-A1- 2002 102 348
- US-B1- 6 214 061
- US-B1- 6 379 842
- US-B1- 6 383 687
- US-B1- 6 426 863
- US-B1- 6 432 584
- PATENT ABSTRACTS OF JAPAN vol. 2003, no. 01, 14 January 2003 (2003-01-14) & JP 2002 279972 A (SANYO ELECTRIC CO LTD), 27 September 2002 (2002-09-27)
- PATENT ABSTRACTS OF JAPAN vol. 018, no. 658 (E-1643), 13 December 1994 (1994-12-13) & JP 06 260168 A (JAPAN STORAGE BATTERY CO LTD), 16 September 1994 (1994-09-16)
- PATENT ABSTRACTS OF JAPAN vol. 2002, no. 02, 2 April 2002 (2002-04-02) & JP 2001 279490 A (NISSHIN STEEL CO LTD), 10 October 2001 (2001-10-10)

## Description

### CROSS-REFERENCE TO RELATED APPLICATION

This application claims the benefit of Korean Application No. 2002-65483, filed October 25, 2002, in the Korean Intellectual Property Office.

### BACKGROUND OF THE INVENTION

### 1 . Field of the Invention

The present invention relates to a negative electrode for a lithium secondary battery and a lithium secondary battery comprising the same, and more particularly, to a negative electrode for the lithium secondary battery having improved cycle-life characteristics and a lithium secondary battery comprising the same.

### 2. Description of the Related Art

The use of portable electronic instruments is increasing as electronic equipment gets smaller and lighter due to developments in high-tech electronic industries. Studies on secondary batteries are actively being pursued in accordance with the increased need for a battery having a high energy density for use as a power source in these portable electronic instruments. Batteries generate energy through an electrochemical reaction between positive and negative electrodes. Accordingly, in order to improve the performance and safety characteristics in batteries, such as cycle-life characteristics, capacity, and power, the electrochemical characteristics of active materials participating in the electrochemical reaction require improvement. Accordingly, studies on improving the electrochemical characteristics of negative and positive active materials are ongoing.

Lithium is promising to provide a high capacity battery due to the high electric capacity per unit weight thereof, and to provide a high voltage due to its high electro negativity. Further, in the case of employing a lithium metal as a negative active material, the lithium metal can serve both as an active material and a current collector. A metallic lithium plate can therefore be used for a negative electrode plate as is, without requiring an additional current collector. In addition, the negative electrode plate may be prepared by depositing lithium on a metal foil in a certain thickness or by compressing a lithium foil onto a metal foil or exmet (expanded metal) sheet, or may also be prepared by depositing a metal on a polymer film and subsequently attaching a lithium foil thereto or depositing a lithium metal thereon.

However, lithium metal lacks safety and tends to undergo a side reaction with an electrolyte and generate dendrites. In addition, in order to prolong battery cycle-life, an excessive amount of lithium is required that is 4 or 5 times that of an amount of positive active material utilized. Further, for a negative electrode plate fabricated by deposition or compression techniques, the electrochemically reactive lithium is present on the outermost surface thereof. In this case, when the surface is rough, a substantial number of dendrites are generated so that the amount of electrochemically inactive lithium is disadvantageously increased.

Further, when the lithium is deposited on a substrate, the mean surface roughness (Ra) of deposited lithium is affected by the mean surface roughness of the substrate. Therefore, an electrode having lithium deposited on a substrate with a rough surface is inferior to an electrode with lithium deposited on a smooth surface in terms of cycle-life characteristics of a battery since the lithium ions tend to be concentrated on pinnacles on the surface due to movement of the lithium ions during charge and discharge. Thus, dendrites of lithium are excessively generated. As a result, many lithium ions can no longer participate in the electrochemical reaction, resulting in deterioration of the cycle-life of the battery.
Electrodes for secondary lithium cells having a smooth surface are described with the prior art for instance in US 6,432,584 B1, EP 1 244 164 A1 and US 2002/0086213 A1.

Accordingly, the cycle-life characteristics may be improved by controlling the mean surface roughness of the substrate for a negative electrode to within a certain range.

### SUMMARY OF THE INVENTION

It is an aspect of the present invention to provide a negative electrode for a lithium secondary battery having improved cycle-life characteristics.

It is another aspect of the present invention to provide a lithium secondary battery comprising the negative electrode having improved cycle-life characteristics.

To achieve these aspects, the present invention provides a negative electrode for the lithium secondary battery comprising a substrate having a mean surface roughness of 30 to 100 Å and a lithium layer coated on the substrate.

The present invention further provides a lithium secondary battery comprising the negative electrode.

### BRIEF DESCRIPTION OF THE DRAWINGS

These and/or other aspects and advantages of the invention will become apparent and more readily appreciated from the following description of the preferred embodiments, taken in conjunction with the accompanying drawings of which:
FIG. 1 is a cross-sectional drawing illustrating a negative electrode according to an embodiment of the present invention.
FIG. 2 is a cross-sectional drawing illustrating a lithium secondary battery according to an embodiment of the present invention.
FIG. 3 is a graph showing cycle-life characteristics of test cells according to Example 3 and Comparative Example 2.
FIG. 4 is a graph showing cycle-life characteristics of test cells according to Examples 4-9 and Comparative Examples 3 and 4.

### DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to the like elements throughout. The embodiments are described below in order to explain the present invention by referring to the figures.

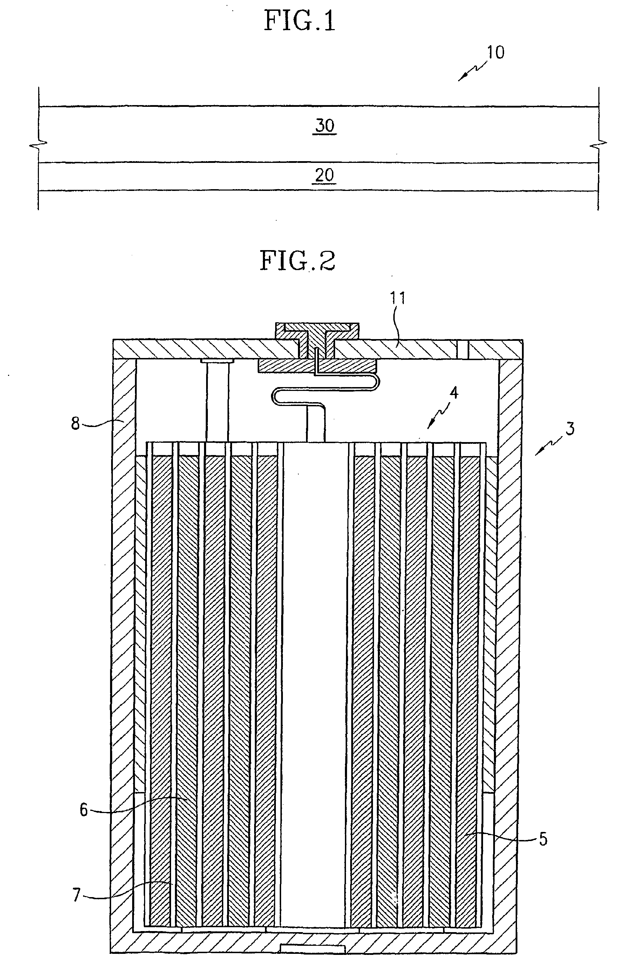

Hereinafter, the present invention is described with reference to the attached drawings in detail. According to the first embodiment, a negative electrode for the lithium secondary battery is provided. The negative electrode improves cycle-life characteristics of the lithium secondary battery. FIG. 1 shows a cross-sectional drawing of a negative electrode for a lithium secondary battery according to an embodiment of the present invention.

The negative electrode (10) for the lithium secondary battery is prepared by coating a lithium layer (30) on a substrate (20) having a mean surface roughness of 30 to 100 Å. The substrate is also used as a negative electrode current collector. When the mean surface roughness is brought to less than 30 Å, time and effort are consumed so that the cost is increased. If the roughness is too high lithium concentrates on the pinnacles of the negative electrode surface, generating lithium dendrites, and dead lithium which cannot participate in the electrochemical reaction increases, so that the cycle-life characteristics are deteriorated.

The substrate (20) of the negative electrode is a conductive substrate since a conductive substrate offers a continuous electric network to provide an uninterrupted electron supply so that the amount of dead lithium is decreased.

A conductive substrate for a negative electrode is a polymer film deposited with a metal. The method to control the mean surface roughness of the negative electrode is determined according to the type of substrate.

Metals suitable for being applied to the negative electrode in the form of a metal film may include copper or nickel. The conductive film may include polyacetylene, polypyrrole, polyaniline, polythiophene, poly(p-phenylene), poly(phenylene vinylene), polyazulene, polyperinaphthalene, polyacene, polynaphthalene-2,6-diyl, and the like. The polymer film deposited with the metal is a polymer film on which a metal such as copper or nickel is deposited. Since the polymer film deposited with the metal also significantly influences the mean surface roughness of the negative electrode substrate, the mean surface roughness of the polymer film is preferably controlled within the range equivalent to that of the negative electrode substrate. The polymer film incorporated with a conductive agent is a polymer film having a conductive agent dispersed therein. Representative examples of the conductive agent may include a conductive metal oxide such as tin oxide, tin phosphate (SnPO₄) titanium oxide, or a perovskite material (LaSrCoO₃, LaSrMnO₃) a metal such as tin, copper, or nickel, and a carbonaceous conductive material such as graphite or carbon black.

The polymer film used in fabricating the polymer film deposited with the metal or the polymer film incorporated with the conductive agent may include a polyester such as poly(ethylene terephthalate) (PET) and poly(butylene terephthalate) (PBT); a polyolefin such as polyethylene and polypropylene; a polyamide such as nylon ; poly(vinylidene fluoride), poly(tetrafluoro ethylene), polystyrene, poly(acrylonitrile), poly(vinyl chloride); a polycarbonate; a polyacrylate such as poly(methyl methacrylate), and a copolymer or a mixture thereof, and preferably poly(ethylene terephthalate), polypropylene, polyethylene, or poly(vinyl chloride).

When a negative electrode is used in which lithium metal is coated on the substrate having the desired mean roughness, it is not likely that lithium ions will concentrate on the pinnacles of the electrode surface. Thus, the formation of dendrites is prevented, and the amount of dead lithium is decreased, improving the cycle-life characteristics of a lithium secondary battery.

When a metallic lithium negative electrode having a thickness of 50 µm or less is used, the substrate supporting the electrode is preferably a substrate having a mean surface roughness controlled within the desired range. The method for applying the lithium layer (30) to the substrate (20) may include depositing the lithium on the substrate or compressing a lithium foil on the substrate. Preferably, a deposition technique is used. Most preferably, it is a deposition technique using a Tungsten boat or a Molybdenum boat. The deposition pressure is preferably controlled to be in a range between 5.0×10⁻⁷ and 5.0×10⁻⁶ torr (0.665 × 10⁻⁷ and 0.665 × 10⁻⁶ kPa).

The metallic lithium negative electrode may be used for a negative electrode for the lithium secondary battery. Lithium secondary batteries are classified as a lithium ion battery, a lithium ion polymer battery, or a lithium polymer battery, depending on the kinds of separator and electrolyte. The batteries are further classified as a cylindrical type, a prismatic type, a coin type, a pouch type, and the like, depending on the shape. In addition, the battery may be divided into a bulk type and a thin film type, depending on the size. The individual structures and fabrication methods thereof are known in the art. Among them, the structure of a prismatic-type battery is shown in FIG. 2. The lithium ion prismatic battery (3) is assembled by inserting an electrode assembly (4) into a casing (8), injecting an electrolyte into the upper part of the casing (8), and sealing the casing (8) with a cap plate (11). The electrode assembly (4) comprises a positive electrode (5), a negative electrode (6), and a separator (7) interposed between the positive electrode (5) and the negative electrode (6).

The second embodiment according to the present invention provides a lithium secondary battery comprising the negative electrode according to the first embodiment. The lithium secondary battery comprises a negative electrode comprising a substrate having a mean surface roughness of 30 to 100 Å and a lithium layer coated on the substrate and a positive electrode comprising at least one positive active material selected from the group consisting of a lithium-included metal oxide, a lithium-included chalcogenide compound, a sulfur-based material, and a conductive polymer.

The lithium-included metal oxide or lithium-included chalcogenide compound is preferably selected from the group consisting of compounds represented by the formulas (1) to (13):

LiₓMn_{1-y}M_{y}A₂ (1)

LiₓMn_{1-y}M_{y}CO_{2-z}X_{z} (2)

LiₓMn₂O_{4-z}X_{z} (3)

LiₓMn_{2-y}M_{y}A₄ (4)

LiₓCO_{1-y}M_{y}A₂ (5)

LiₓCO_{1-y} O_{2-z}X_{z} (6)

LiₓNi_{1-y}M_{y}A₂ (7)

LiₓNi_{1-y} O_{2-z}X_{z} (8)

LiₓNi_{1-y}CO_{y}O_{2-z}X_{z} (9)

LiₓNi_{1-y-z}CO_{y}M_{z}A_{α} (10)

LiₓNi_{1-y-z}Co_{y}M_{z}O_{2-α}X_{α} (11)

LiₓNi_{1-y-z}Mn_{z}MA_{α} (12)

LiₓNi_{1-y-z}Mn_{y}M_{z}O_{2-α}X_{α} (13)

wherein
0.9≤×≤1.1, 0 ≤y ≤0.5, 0 ≤z ≤0.5, 0 ≤ α≤2;

M is at least one selected from the group consisting of Al, Ni, Co, Mn, Cr, Fe, Mg, Sr, V, and rare earth elements;

A is selected from the group consisting of O, F, S, and P; and

X is selected from the group consisting of F, S, and P.

The sulfur-based material is selected from the group consisting of elemental sulfur, Li₂Sₙ (n≥1), Li₂Sₙ (n≥1) dissolved in a catholyte, an organo sulfur compound, and a carbon-sulfur polymer (C₂Sₓ)ₙ (wherein x = 2.5 to 50, n≥2).

A separator may further be interposed between the positive electrode and the negative electrode. The separator may be one or more layers of a compound selected from the group consisting of polyethylene, polypropylene, and polyvinylidene fluoride, or it may be a combined multi-layer such as a polyethylene/polypropylene two-layered separator, a polyethylene/polypropylene/polyethylene three-layered separator, or a polypropylene/polyethylene/polypropylene three-layered separator.

The electrolyte may include a non-aqueous electrolyte or a solid electrolyte. The non-aqueous electrolyte is prepared by dissolving a lithium salt in an organic solvent. The non-aqueous organic solvent may include a carbonate, ester, ether, or ketone. The carbonate may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and butylene carbonate (BC). The ester may include n-methyl acetate, n-ethyl acetate, and n-propyl acetate. The ether may include dimethyl ether (DME) and tetrahydrofuran (THF)

The lithium salt is one or a mixture of two or more selected from the group consisting of LiPF₆, LiBF₄, LiSbF₆, LiAsF₆, LiClO₄, LiCF₃SO₃, Li(CF₃SO₂)₂N, LiC₄F₉S0₃, LiAlO₄, LiAlCl₄, LiN(CₓF₂ₓ₊₁SO₂)(C_{y}F_{2y+1}SO₂) (wherein x and y are natural numbers), LiCl, and Lil.

The solid electrolyte may include a polymer electrolyte of polyethylene oxide or a polymer electrolyte composed of at least one polyorganosiloxane side chain or polyoxyalkylene side chain; a sulfide electrolyte such as Li₂S-SiS₂, Li₂S-GeS₂, Li₂S-P₂S₅, Li₂S-B₂S₃, and the like; and an inorganic compound electrolyte such as Li₂S-SiS₂-Li₃PO₄, Li₂S-SiS₂-Li₃SO₄, and the like.

The following examples 1 and 3 illustrate the present invention in further detail, but the present invention is not limited by these examples.

### Example 1 not according to the invention

The 25 µm thick copper foil was provided as a negative electrode substrate. The mean surface roughness (Ra) was determined to be 1400 Å (0.14 µm) using an optical 3D profiling system (NT2000, available from WYKO). The copper foil was covered with a stainless mask having a 1.2 cm square hole, and lithium metal was deposited thereon at a thickness of 1.5 µm. The copper foil deposited with lithium was used as a negative electrode, and lithium foil was used as a counterpart electrode to fabricate a test cell. The electrolyte used for fabricating the cell was a 1 M LiSO₃CF₃ electrolyte solution of dioxolan/diglyme/sulfolane/dimethoxy ethane (5/2/1/2 volume ratio).

### Example 2

For a negative electrode substrate, copper was deposited on a poly(ethylene terephthalate) (PET) film. Specifically, copper was deposited on a 200 µm thick PET film using a Tungsten boat under 2×10⁻⁶ torr (0.266 × 10⁻⁶ kPa) to prepare a negative electrode substrate. The thickness of the deposited copper was 0.1 µm, and the mean surface roughness was 100 Å (0.01 µm), determined using an optical 3D profiling system (NT2000, available from WYKO). The negative electrode substrate was covered with a stainless steel mask having a 1.2 cm square hole, and lithium metal was deposited thereon at a thickness of 1.5 µm. The lithium-deposited substrate was used as a negative electrode, and lithium foil was used as a counterpart electrode to fabricate a test cell. The electrolyte used for fabricating the cell was a 1 M LiSO₃CF electrolyte solution of dioxolan/diglyme/sulfolane/dimethoxy ethane (5/2/1/2 volume ratio).

### Comparative Example 1

A test cell was fabricated by the same procedure as in Example 1, except that the negative electrode substrate was a copper foil with a mean surface roughness of 4500 Å (0.45 µm).

Test cells according to Examples 1 and 2 and Comparative Example 1 were subjected to charge and discharge at a constant current with a current density of 1 mA/µm for 360 seconds, and the cycle efficiencies of the cells were measured. The results are shown in following Table 1:

**Table 1**

| | Example 1 | Example 2 | Comparative Example 1 |
|---|---|---|---|
| Cycle efficiency (%) | 70.3% | 80.7% | 50.5% |

As shown in Table 1, the cells using negative electrodes according to Examples 1 and 2 were superior to the cells of Comparative Example 1 and of example in terms of cycle efficiency. In particular, the lower mean surface roughness is superior in terms of cycle efficiency.

### Example 3

For a negative electrode substrate, copper was deposited on a poly(ethylene terephthalate) (PET) film. Specifically, copper was deposited on a 200 µm thick PET film using a Tungsten boat under 2×10⁻⁶ torr (0.266 × 10⁻⁶ kPa) to prepare a negative electrode substrate. The thickness of the deposited copper was 0.1 µm, and the mean surface roughness was 100 Å (0.01 µm), determined using an optical 3D profiling system (NT2000, available from WYKO). The negative electrode substrate was covered with a stainless steel mask having a 1.2 cm square hole, and lithium metal was deposited thereon at a thickness of 1.5 µm to prepare a negative electrode.

A positive active material of sulfur powder, a binder of polyethylene oxide (PEO), and a conductive agent of ketjen black were used at a ratio of 75, 12, and 13 wt %, respectively, to prepare a positive electrode. A separator was prepared using a 16 µm-thick, three-layered porous polymer film of polypropylene (PP)/polyethylene (PE)/polypropylene (PP). A test cell was assembled using the negative electrode, the positive electrode, and the separator. The electrolyte used for fabricating the cell was a 1 M LiSO₃CF₃ electrolyte solution of dimethoxy ethane/diglyme/dioxolan (4: 4: 2 volume ratio).

### Comparative Example 2

A negative electrode was prepared by depositing lithium on a 10 µm thick copper foil having a mean surface roughness of 4470 Å (0.447 µm), determined using an optical 3D profiling system (NT2000, available from WYKO), to a thickness of 20 µm. The deposition process was carried out using a Tungsten boat at a deposition pressure of 2.0×10⁻⁶ torr (0.266 × 10⁻⁶ kPa). A test cell was fabricated by the same procedure as in Example 3 using the obtained negative electrode.

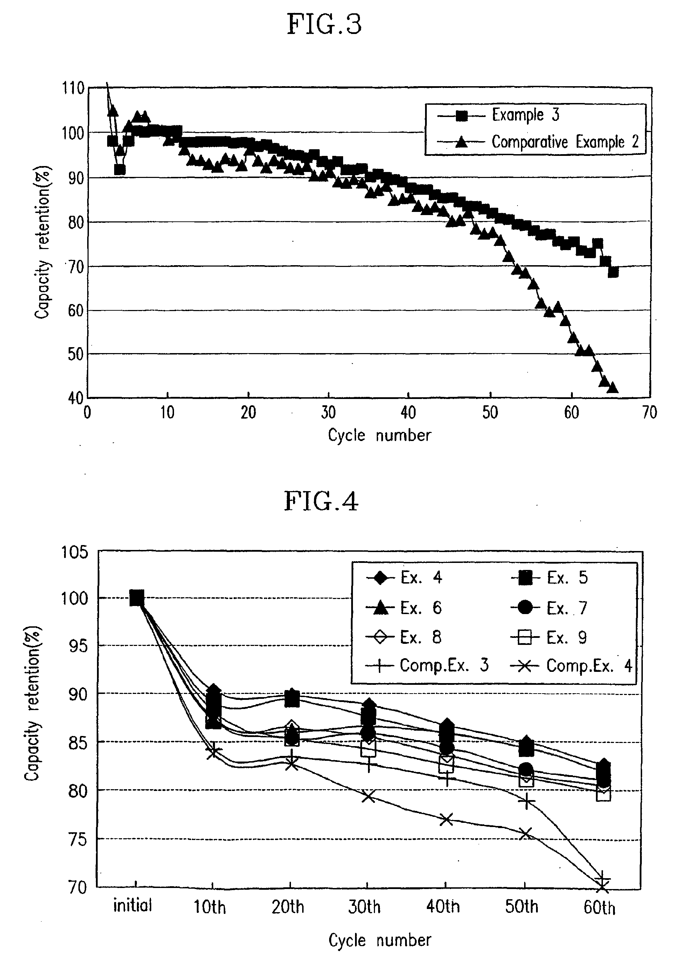

To confirm the influence of the negative electrode substrate on the cycle-life characteristics, test cells according to Example 3 and Comparative Example 2 were charged at 0.2 C and discharged at 0.5 C under a voltage range of between 1.5 and 2.8 V to determine the cycle-life characteristics, and the results are shown in FIG. 3. As shown in FIG. 3, the cycle-life characteristics of the test cell according to Example 3 with the lithium negative electrode comprising the substrate having a mean surface roughness of 100 Å is dramatically superior to the cycle-life characteristics of Comparative Example 2 comprising the substrate having a mean surface roughness of 4470 Å.

### Examples 4-9 not according to the invention and Comparative Examples 3 and 4

To evaluate battery performance with respect to the mean surface roughness of a substrate, 200 µm thick copper plates with mean surface roughness values of 450 Å (Example 4), 1078 Å (Example 5), 1424 Å (Example 6), 2000 Å (Example 7), 2473 Å (Example 8), 3200 Å (Example 9), 4537 Å (Comparative Example 3), and 5520 Å (Comparative Example 4) were used. Lithium metal was deposited on the copper plates having the controlled mean surface roughness values to a thickness of 20 µm to prepare negative electrodes. The deposition process was carried out using a Tungsten boat at a deposition pressure of 2×10⁻⁶ torr (0.266 × 10⁻⁶ kPa). Using the obtained negative electrodes, test cells were assembled by the same procedure as in Example 3. The capacity retention rate ((retention capacity/ initial capacity)×100) was calculated for each cell, and the results are shown in Table 2.

**Table 2**

| | | Retention rate (%) at 10^{th} cycle | Retention rate (%) at 20^{th} cycle | Retention rate (%) at 30^{th} cycle | Retention rate (%) at 40^{th} cycle | Retention rate (%) at 50^{th} cycle | Retention rate (%) at 60^{th} cycle |
|---|---|---|---|---|---|---|---|
| Example 4 | 450 Å | 90.3 | 89.7 | 88.7 | 86.6 | 84.9 | 82.6 |
| Example 5 | 1078 Å | 89.0 | 89.4 | 87.6 | 85.8 | 84.3 | 82.0 |
| Example 6 | 1424 Å | 87.4 | 86.1 | 86.6 | 85.7 | 84.3 | 81.8 |
| Example 7 | 2000 Å | 88.2 | 85.3 | 85.8 | 84.3 | 82.9 | 81.0 |
| Example 8 | 2473 Å | 87.1 | 86.4 | 85.5 | 83.6 | 82.5 | 80.5 |
| Example 9 | 3200 Å | 87.2 | 85.3 | 84.2 | 82.5 | 82.2 | 79.8 |
| Comparative Example3 | 4537 Å | 84.2 | 83.4 | 82.6 | 81.1 | 77.5 | 71.1 |
| Comparative Example 4 | 5520 Å | 83.7 | 82.6 | 79.3 | 76.9 | 75.5 | 70.3 |

Table 2 comprises a set of examples indicating cycle-life characteristics with electrodes having substrates exhibiting different mean surface roughness values (all electrodes fall outside the invention as claimed in claim 1).

Since the negative electrode for the lithium secondary battery according to an embodiment of the present invention comprises a substrate having a mean surface roughness within a certain range, the cycle-life characteristics of the lithium secondary battery are improved.

While the present invention has been described in detail with reference to the preferred embodiments, those skilled in the art will appreciate that various modifications and substitutions can be made thereto as set forth in the appended claims.

## Claims

1. A negative electrode for a lithium secondary battery comprising:
a substrate having a mean roughness of 30 to 100 Å; wherein the mean roughness is determined by an optical 3D profiling system; and
a lithium layer coated on the substrate, wherein the substrate for the negative electrode consists of a polymer film on which a metal is deposited and wherein the polymer film is at least one selected from the group consisting of polyester, polyolefin polyamide, polycarbonate, polyacrylate, and a copolymer or a mixture thereof.

2. The negative electrode for the lithium secondary battery according to claim 1, wherein the metal is copper or nickel.

3. The negative electrode according to claim 1, wherein the polymer film is at least one selected from the group consisting of: poly(vinylidene fluoride), poly(tetrafluoro ethylene), polystyrene, poly(acrylonitrile), poly(vinyl chloride), a copolymer thereof and a mixture thereof.

4. The negative electrode of claim 1, wherein the polyester is one of: poly(ethylene terephthalate) (PET), poly(butylene terephthalate) (PBT), a copolymer thereof and a mixture thereof.

5. The negative electrode of claim 1, wherein the polyolefin is one of: polyethylene, polypropylene, a copolymer thereof and a mixture thereof.

6. The negative electrode of claim 1, wherein the polyamide is one of: nylon, a copolymer thereof and a mixture thereof

7. The negative electrode of claim 1, wherein the polyacrylate is one of: poly(methyl methacrylate), and a copolymer or a mixture thereof.

8. A lithium secondary battery comprising a negative electrode according to any of claims 1 to 7; and a positive electrode comprising at least one positive active material selected from the group consisting of a lithium-included metal oxide, a lithium-included chalcogenide compound, a sulfur-based material, and a conductive polymer.

9. The lithium secondary battery according to claim 8, wherein the lithium-included metal oxide or lithium-included chalcogenide compound is at least one selected from the group consisting of compounds represented by the formulas (1) to (13):
LiₓMn_{1-y}M_{y}A₂ (1) (1)
LiₓMn_{1-y}MyO_{2-z}X_{z} (2)
LiₓMn₂O_{4-z}X_{z} (3)
LiₓMn_{2-y}M_{y}A₄ (4)
LiₓCO_{1-y}M_{y}A₂ (5)
LiₓCO_{1-y}O_{2-z}X_{z} (6)
LiₓNi_{1-y}M_{y}A₂ (7)
LiₓNi_{1-y}O_{2-z}X_{z} (8)
LiₓNi_{1-y}CO_{y}O_{2-z}X_{z} (9)
LiₓNi_{1-y-z}CO_{y}M_{z}A_{α} (10)
LiₓNi_{1-y-z}CO_{y}M_{z}O_{2-α}X_{α} (11)
LiₓNi_{1-y-z}Mn_{y}M_{z}A_{α} (12)
LᵢₓNi_{1-y-z}Mn_{y}M_{z}O_{2-α}X_{α} (13)
wherein
0.9 ≤x ≤1.1, 0 ≤y ≤0.5, 0 ≤z ≤0.5, 0 ≤ α≤2;
M is at least one selected from the group consisting of Al, Ni, Co, Mn, Cr, Fe, Mg, Sr, V, and rare earth elements;
A is selected from the group consisting of O, F, S, and P; and
X is selected from the group consisting of F, S, and P.

10. The lithium secondary battery according to claim 8, wherein the sulfur based material is selected from the group consisting of elemental sulfur, Li₂Sₙ (n≥1), or Li₂Sₙ (n≥1) dissolved in a catholyte, an organo sulfur compound, and a carbon-sulfur polymer (C₂Sₓ)ₙ (wherein x = 2.5 to 50, n≥2).

11. The lithium secondary battery according to claim 8, further comprising a separator interposed between the positive electrode and the negative electrode, wherein the separator is selected from the group consisting of a polyethylene, polypropylene, or polyvinylidene fluoride separator, a polyethylene/polypropylene two-layered separator, a polyethylene/polypropylene/polyethylene three-layered separator, and a polypropylene/polyethylene/polypropylene three-layered separator.

12. The lithium secondary battery according to claim 8, further comprising an electrolyte, wherein the electrolyte is a non-aqueous electrolyte or a solid electrolyte.

## Patentansprüche

1. Eine negative Elektrode für eine Lithium-Sekundärbatterie, umfassend:
ein Substrat mit einer mittleren Rauigkeit von 30 bis 100 Å; wobei die mittlere Rauigkeit durch ein optisches 3D-Profilermittlungssystem bestimmt ist; und
eine auf dem Substrat aufgetragene Lithiumschicht, wobei das Substrat für die negative Elektrode aus einem Polymerfilm besteht, auf dem ein Metall abgeschieden ist, und wobei der Polymerfilm mindestens ein aus der aus Polyester, Polyolefin, Polyamid, Polycarbonat, Polyacrylat und einem Copolymer oder einer Mischung derselben bestehenden Gruppe ausgewählter ist.

2. Die negative Elektrode für die Lithium-Sekundärbatterie nach Anspruch 1, wobei das Metall Kupfer oder Nickel ist.

3. Die negative Elektrode nach Anspruch 1, wobei der Polymerfilm mindestens ein aus der aus Poly(vinylidenfluorid), Poly(tetrafluorethylen), Polystyrol, Poly(acrylnitril), Poly(vinylchlorid), einem Copolymer oder einer Mischung derselben bestehenden Gruppe ausgewählter ist.

4. Die negative Elektrode nach Anspruch 1, wobei der Polyester einer von Poly(ethylenterephthalat) (PET), Poly(butylenterephthalat) (PBT), einem Copolymer derselben und einer Mischung derselben ist.

5. Die negative Elektrode nach Anspruch 1, wobei das Polyolefin eines von Polyethylen, Polypropylen, einem Copolymer derselben und einer Mischung derselben ist.

6. Die negative Elektrode nach Anspruch 1, wobei das Polyamid eines von Nylon, einem Copolymer desselben und einer Mischung desselben ist.

7. Die negative Elektrode nach Anspruch 1, wobei das Polyacrylat eines von Poly(methylmethacrylat) und einem Copolymer desselben oder einer Mischung desselben ist.

8. Eine Lithium-Sekundärbatterie, umfassend
eine negative Elektrode nach einem der Ansprüche 1 bis 7; und
eine positive Elektrode, die mindestens ein aus der aus einem Lithium beinhaltenden Metalloxid, einer Lithium beinhaltenden Chalcogenverbindung, einem Material auf Schwefel-Basis und einem leitenden Polymer bestehenden Gruppe ausgewähltes positives aktives Material umfasst.

9. Die Lithium-Sekundärbatterie nach Anspruch 8, wobei das Lithium beinhaltende Metalloxid oder die Lithium beinhaltende Chalcogenverbindung mindestens ein aus der aus durch die Formeln (1) bis (13) dargestellten Verbindungen bestehenden Gruppe Ausgewähltes ist:
LiₓMn_{1-y}M_{y}A₂ (1)
LiₓMn_{1-y}M_{y}O_{2-z}X_{z} (2)
LiₓMn₂O_{4-z}X_{z} (3)
LiₓMn_{2-y}M_{y}A₄ (4)
LiₓCO_{1-y}M_{y}A₂ (5)
LiₓCO_{1-y}O_{2-z}X_{z} (6)
LiₓNi_{1-y}M_{y}A₂ (7)
LiₓNi_{1-y}O_{2-z}X_{z} (8)
LiₓNi_{1-y}Co_{y}O_{2-z}X_{z} (9)
LiₓNi_{1-y-z}CO_{y}M_{z}A_{α} (10)
LiₓNi_{1-y-z}Co_{y}M_{z}O_{2-α}X_{α} (11)
LiₓNi_{1-y-z}Mn_{y}M_{z}A_{α} (12)
LiₓNi_{1-y-z}Mn_{y}MO_{2-α}X_{α} (13)
wobei
0,9 ≤ x < 1,1, 0 ≤ y ≤ 0,5, 0 ≤ z ≤ 0,5, 0 ≤ α ≤ 2;
M mindestens ein aus der aus Al, Ni, Co, Mn, Cr, Fe, Mg, Sr, V und Seltenerdelementen bestehenden Gruppe Ausgewähltes ist;
A aus der aus O, F, S und P bestehenden Gruppe ausgewählt ist; und
X aus der aus F, S und P bestehenden Gruppe ausgewählt ist.

10. Die Lithium-Sekundärbatterie nach Anspruch 8, wobei das Material auf Schwefel-Basis aus der aus elementarem Schwefel, Li₂Sₙ(n≥1), oder in einem Katholyten gelöstem Li₂Sₙ(n≥1), einer Organoschwefelverbindung und einem Kohlenstoff-Schwefel-Polymer (C₂Sₓ)ₙ (wobei x = 2,5 bis 50, n≥2) bestehenden Gruppe ausgewählt ist.

11. Die Lithium-Sekundärbatterie nach Anspruch 8, ferner einen zwischen der positiven Elektrode und der negativen Elektrode eingefügten Separator umfassend, wobei der Separator aus der aus einem Polyethylen-, Polypropylen- oder Polyvinylidenfluorid-Separator, einem Polyethylen/Polypropylen-Zweischichtseparator, einem Polyethylen/Polypropylen/Polyethylen-Dreischichtseparator und einem Polypropylen/Polyeihylen/Polypropylen-Dreischichtseparator bestehenden Gruppe ausgewählt ist.

12. Die Lithium-Sekundärbatterie nach Anspruch 8, ferner einen Elektrolyten umfassend, wobei der Elektrolyt ein nichtwässriger Elektrolyt oder ein fester Elektrolyt ist.

## Revendications

1. Électrode négative pour accumulateur au lithium comprenant :
un substrat ayant une rugosité moyenne de 30 à 100 Å ; la rugosité moyenne étant déterminée par un système de profilage optique tridimensionnel ; et
une couche de lithium appliquée sur le substrat,
dans laquelle le substrat pour l'électrode négative consiste en un film polymère sur lequel est déposé un métal, et dans laquelle le film polymère est au moins membre du groupe formé par un polyester, une polyoléfine, un polyamide, un polycarbonate, un polyacrylate et un copolymère ou un mélange d'entre eux.

2. Électrode négative pour accumulateur au lithium selon la revendication 1, dans laquelle le métal est le cuivre ou le nickel.

3. Électrode négative selon la revendication 1, dans laquelle le film polymère est au moins un membre du groupe formé par : le poly(fluorure de vinylidène), le poly(tétrafluoroéthylène), le polystyrène, le poly-(acrylonitrile), le poly(chlorure de vinyle), un copolymère d'entre eux et un mélange d'entre eux.

4. Électrode négative selon la revendication 1, dans laquelle le polyester est l'un des suivants: poly(téréphtalate d'éthylène) (PET), poly(téréphtalate de butylène) (PBT), un copolymère d'entre eux et un mélange d'entre eux.

5. Électrode négative selon la revendication 1, dans laquelle la polyoléfine est l'une des suivantes : polyéthylène, polypropylène, un copolymère d'entre eux et un mélange d'entre eux.

6. Électrode négative selon la revendication 1, dans laquelle le polyamide est l'un des suivants : Nylon, un copolymère de celui-ci et un mélange d'entre eux.

7. Électrode négative selon la revendication 1, dans laquelle le polyacrylate est l'un des suivants : poly(méthacrylate de méthyle) et un copolymère ou un mélange d'entre eux.

8. Accumulateur au lithium comprenant
une électrode négative selon l'une quelconque des revendications 1 à 7 ; et
une électrode positive comprenant au moins une matière active positive choisie dans le groupe formé par un oxyde métallique incluant du lithium, un chalcogénure incluant du lithium, une matière à base de soufre et un polymère conducteur.

9. Accumulateur au lithium selon la revendication 8, dans lequel l'oxyde métallique incluant du lithium ou le chalcogénure incluant du lithium est au moins un membre du groupe formé par les composés représentés par les formules (1) à (13) :
LiₓMn_{1-y}M_{y}A₂ (1)
LiₓMn_{1-y}M_{y}O_{2-z}X_{z} (2)
LiₓMn₂O_{4-z}X_{z} (3)
LiₓMn_{2-y}M_{y}A₄ (4)
LiₓCO_{1-y}M_{y}A₂ (5)
LiₓCO_{1-y}O_{2-z}X_{z} (6)
LiₓNi_{1-y}M_{y}A₂ (7)
LiₓNi_{1-y}O_{2-z}X_{z} (8)
LiₓNi_{1-y}CO_{y}O_{2-z}X_{z} (9)
LiₓNi_{1-y-z}CO_{y}M_{z}A_{α} (10)
LiₓNi_{1-y-z}CO_{y}M_{z}O₂-_{α}X_{α} (11)
LiₓNi_{1-y-z}Mn_{y}M_{z}A_{α} (12)
LiₓNi_{1-y-z}Mn_{y}M₂O₂-_{α}X_{α} (13)
où
0,9 ≤ x ≤ 1, 1, 0 ≤ y ≤ 0, 5, 0 ≤ z ≤ 0, 5, 0 ≤ α ≤ 2 ;
M est au moins un membre du groupe formé par Al, Ni, Co, Mn, Cr, Fe, Mg, Sr, V et les éléments des terres rares ;
A est choisi dans le groupe formé par 0, F, S et P; et
X est choisi dans le groupe formé par F, S et P.

10. Accumulateur au lithium selon la revendication 8, dans lequel la matière à base de soufre est choisie dans le groupe formé par le soufre élémentaire, Li₂Sₙ (n ≥ 1) ou Li₂Sₙ (n ≥ 1) dissous dans un catholyte, un composé organosulfuré et un polymère carbone-soufre (C₂Sₓ)ₙ (où x = 2,5 à 50, n ≥ 2).

11. Accumulateur au lithium selon la revendication 8, comprenant de plus un séparateur interposé entre l'électrode positive et l'électrode négative, le séparateur étant choisi dans le groupe formé par un séparateur de polyéthylène, polypropylène ou fluorure de polyvinylidène, un séparateur à deux couches de polyéthylène/polypropylène, un séparateur à trois couches de polyéthylène/polypropylène/polyéthylène, et un séparateur à trois couches de polypropylène/polyéthylène/polypropylène.

12. Accumulateur au lithium selon la revendication 8, comprenant de plus un électrolyte, l'électrolyte étant un électrolyte non aqueux ou un électrolyte solide.
